# EUROPÄISCHE PATENTSCHRIFT

(11) **EP 3 882 061 B1**
(45) Veröffentlichungstag und Bekanntmachung des Hinweises auf die Patenterteilung: **10.01.2024**
(21) Anmeldenummer: 21161968.9
(22) Anmeldetag: 11.03.2021
(51) Int. Cl.: B60K 1/00, B60K 25/00

(54) **VERFAHREN ZUM BETRIEB ELEKTRISCH ANGETRIEBENER FAHRZEUGE SOWIE ANTRIEBSANORDNUNG**
METHOD FOR OPERATING ELECTRICALLY DRIVEN VEHICLES AND DRIVE ARRANGEMENT
PROCÉDÉ D'OPÉRATION DE VÉHICULE À ENTRAÎNEMENT ÉLECTRIQUE, ET AGENCEMENT D'ENTRAÎNEMENT

(30) Priorität: 16.03.2020 DE 102020203309; 04.06.2020 DE 102020206971
(43) Veröffentlichungstag der Anmeldung: 22.09.2021
(73) Patentinhaber: ContiTech Antriebssysteme GmbH, 30165 Hannover (DE)
(72) Erfinder: Chen, Zhongying, 30419 Hannover (DE); Fiss, Tim, 30419 Hannover (DE)
(74) Vertreter: Continental Corporation

(56) Entgegenhaltungen:
- EP-A1- 2 789 492
- EP-A1- 3 590 749
- DE-A1-102017 218 179

## Beschreibung

Die Erfindung betrifft ein Verfahren zum Betrieb elektrisch angetriebener Fahrzeuge, bei denen neben einem elektrischen ersten Motor eines Hauptantriebs weitere elektrische Motoren für Nebenantriebe und/oder elektrisch angetriebene Zusatzaggregate vorgesehen und durch Energie aus einem gemeinsamen Energiespeicher antreibbar sind. Ebenfalls betrifft die Erfindung eine zur Durchführung des Verfahrens geeignete Antriebsanordnung in einem elektrisch angetriebenen Fahrzeug, bei denen neben einem elektrischen Motor eines Hauptantriebs weitere elektrische Motoren für Nebenantriebe und/oder elektrisch angetriebene Zusatzaggregate vorgesehen sind.

Der Einsatz von Elektrofahrzeugen und Hybridfahrzeugen steigt ständig. In diesem Zusammenhang ist es auch erforderlich, neuartige Antriebskonzepte und Antriebsanordnungen zu finden, die den unterschiedlichen Anforderungen an diese Fahrzeuge Rechnung tragen.

Elektrofahrzeuge benötigen zur Wandlung der Drehzahlen und Drehmomente ein Getriebe. Die Elektromotoren werden mit den Getrieben untersetzt. Die Getriebe sind in der Regel als konventionelle Stirnradgetriebe mit integrierter Lagerung der Wellen, sowie einer Kapselung in Form eines Metallgehäuses ausgeführt. Die Getriebe sind 2-stufig oder mehrstufig in der Regel mit einer festen Übersetzung ausgeführt. An die Getriebestufe schließt sich ein Differenzialgetriebe an, das die Leistung auf die Antriebsräder überträgt.

Nebenaggregate für z.B. die Kühlung der Batterie oder insbesondere der Klimakompressor für die Klimatisierung des Fahrgastraums besitzen einen eigenen kleinen Elektromotor, damit diese auch unabhängig von der Fahrzeuggeschwindigkeit betrieben werden können (z.B. Fahrzeugstillstand an einer Ampel oder im Stau).

Die für den Antrieb der Nebenaggregate benötige Energie für die kleineren Hilfselektromotoren wird üblicherweise derselben Batterie entnommen, die auch die Hauptmotoren bzw. die Antriebsmotoren speist. Der Betrieb von Nebenaggregaten verringert somit in häufig signifikantem Umfang die Reichweite des Fahrzeugs.

Die DE 10 2010 019704 A1 offenbart zur Minimierung der hierdurch möglichen Verluste eine Anordnung, bei dem bei einem Hybridfahrzeug Zusatzaggregate nicht mehr durch eine Vielzahl von einzelnen Motoren, sondern durch eine elektromotorisch antreibare Zusatzwelle im Verbrennungsmotor angetrieben werden.

Bei vielen Fahrzeugen ist es darüber hinaus vorgesehen, auch einen Rekuperationsbetrieb durchführen zu können. Bei der Rekuperation oder Wiedergewinnung von Energie in die Batterie, zum Beispiel beim Verzögern/Abbremsen des Fahrzeugs, wird die so zurückgewonnene Energie zuerst durch den Antriebsmotor generatorisch und mit Wirkungsgradverlusten behaftet von mechanischer Bewegungsenergie der Räder in elektrische Energie der Batterie umgewandelt, um dann in einem zweiten ebenfalls verlustbehafteten Schritt von der Batterie wieder in mechanische Energie der Hilfsmotoren umgewandelt zu werden, um damit die Nebenaggregate zu betreiben. Durch die vorhandenen Wirkungsgrade entsteht aber ein doppelter Verlust.

Aus der EP 2 789 492 A1 ist ein Verfahren zum Betrieb mindestens teilweise elektrisch angetriebener Fahrzeuge bekannt, sowie eine Antriebsanordnung in einem elektrisch angetriebenen Fahrzeug,

Für die Erfindung bestand daher einerseits die Aufgabe, insgesamt die durch den Betrieb von Nebenaggregaten entstehenden Verluste zu minimieren und insbesondere auch den Rekuperationsbetrieb so zu verbessern, dass die bei der doppelten Energieumwandlung im Rekuperationsmodus entstehenden Verluste vermieden werden.

Gelöst wird diese Aufgabe durch die Merkmale der Hauptansprüche 1 und 2.

Ebenfalls ist zur Lösung dieser Aufgabe ein Elektrofahrzeug oder Hybridfahrzeug nach Anspruch 3 offenbart.

Dabei sind der Hauptantrieb und mindestens ein Nebenantriebs oder Zusatzaggregat abtriebsseitig über ein vorzugsweise mit einem Freilauf versehenes mechanisches Zusatzgetriebe miteinander so koppelbar, dass die Nebenantriebe und/oder Zusatzaggregate schaltbar entweder durch ihre aus dem Energiespeicher versorgten elektrischen Motoren oder mechanisch über das Zusatzgetriebe angetrieben werden. Nebenantriebe oder Zusatzaggregate sind beispielsweise Klimakompressoren für den Fahrgastraum oder auch Wasserpumpen für Kühlwassersysteme der Fahrbatterie, d.h. des Energiespeichers.

Dabei werden während eines zur Rekuperation erforderlichen Generatorbetriebs des ersten Motors ein oder mehrere der Nebenantriebe oder Aggregate nur über das mechanische Zusatzgetriebe angetrieben.

Eine weitere vorteilhafte Ausbildung besteht darin, dass während des Fahrbetriebs des ersten Motors ein oder mehrere der Nebenantriebe oder Aggregate nur über das mechanische Zusatzgetriebe angetrieben werden.

Eine weitere vorteilhafte Ausbildung besteht darin, dass während eines Stillstands des ersten Motors ein oder mehrere der Nebenantriebe oder Aggregate nur über ihre elektrischen Motoren angetrieben werden.

Eine weitere vorteilhafte Ausbildung besteht darin, dass während des Fahrbetriebs des ersten Motors ein oder mehrere der Nebenantriebe oder Aggregate nur über ihre elektrischen Motoren angetrieben werden.

Eine weitere vorteilhafte Ausbildung besteht darin, dass bei rückwärtslaufendem ersten Motor das mechanisches Zusatzgetriebe von Hauptantrieb und/oder Nebenantriebs oder Zusatzaggregat entkoppelt wird.

Hierdurch ergibt sich eine Einsparung von zwei Energieumwandlungen im Rekuperationsmodus von Elektrofahrzeugen und dadurch Verbesserung des Gesamtwirkungsgrades des Fahrzeuges, ebenfalls eine Verringerung des Reichweitenverlustes durch direkte Nutzung der vorhandenen mechanischen Rekuperationsenergie für den Antrieb der Nebenaggregate.

Ebenfalls erreicht man die Nutzung in Serie befindlicher technischer Automotive-Komponenten und dadurch geringe Realisierungskosten. Vorteilhaft ist auch ein geringer digitaler Steuerungsaufwand, da die mechanischen Komponenten die Betriebssicherheit weitgehend automatisch sicherstellen.

Das erfindungsgemäße Verfahren und die erfindungsgemäße Ausführung der Antriebsanordnung sind für alle Antriebsmaschinen nutzbar, bei denen zeitweilig eine Energierekuperation möglich ist, insbesondere natürlich für Elektrofahrzeuge und Hybridfahrzeuge.

Bei der erfindungsgemäßen Antriebsanordnung sind der Hauptantrieb und mindestens ein Nebenantrieb oder Zusatzaggregat abtriebsseitig über ein vorzugsweise mit einem einen Freilauf und/oder einer Kupplung versehenen mechanischen Zusatzgetriebe miteinander so koppelbar, dass Nebenantrieb oder Zusatzaggregat auch durch den Motor des Hauptantriebs oder durch eine Welle des Hauptantriebs antreibbar ist.

Dabei sind eine schaltbare Kupplung auf der Abtriebsseite des Hauptantriebs und ein Freilauf auf der Abtriebsseite des jeweiligen Nebenantriebs oder Zusatzaggregats vorgesehen.

Dabei ist das mechanische Zusatzgetriebe als Riementrieb ausgebildet, der mindestens einen Zugriemen aufweist, vorzugsweise mit eingebetteten, in Längsrichtung des Zugriemens ausgebildeten Zugträgern, wobei der Zugriemen mindestens zwei Riemenscheiben umlaufend umschlingt.

Dabei ist die Kupplung in Form einer schaltbaren Riemenscheibe ausgebildet.

Dabei ist der Zugriemen als Keilrippenriemen ausgebildet.

Vorzugsweise ist das mechanische Zusatzgetriebe auf Seiten des Hauptantriebs mit einer Zwischenwelle des Getriebes für den Hauptantrieb gekoppelt ist. So lassen sich die erforderlichen Übersetzungen zwischen Hauptantrieb und Nebenaggregat leichter realisieren.

Anhand einiger Verfahrensbeschreibungen und Ausführungsbeispiele soll die Erfindung näher erläutert werden. Es zeigen
- Fig. 1: eine Antriebsanordnung in elektrisch angetriebenen Fahrzeugen in Form einer Prinzipskizze,
- Fig. 2, 3: Hauptbetriebsarten einer Antriebsanordnung gemäß Fig. 1 anhand von Wirkungspfeilen, die den jeweiligen Energiefluss darstellenden,
- Fig. 4: eine erfindungsgemäße Antriebsanordnung,
- Fig. 5: eine kuppelbare Riemenscheibe aus dem Stand der Technik,
- Fig. 6: eine Freilaufscheibe aus dem Stand der Technik,
- Fig. 7: eine erfindungsgemäße Antriebsanordnung gemäß Fig.4 mit dem jeweils vorhandenen Energiefluss bei der Rekuperation anhand von Wirkungspfeilen,
- Fig. 8: eine erfindungsgemäße Antriebsanordnung gemäß Fig.4 mit dem jeweils vorhandenen Energiefluss beim Fahrbetrieb im Normalmodus anhand von Wirkungspfeilen,
- Fig. 9: eine erfindungsgemäße Antriebsanordnung gemäß Fig.4 mit dem jeweils vorhandenen Energiefluss beim Fahrzeugstillstand anhand von Wirkungspfeilen,
- Fig. 10: eine erfindungsgemäße Antriebsanordnung gemäß Fig.4 mit dem jeweils vorhandenen Energiefluss beim Fahrbetrieb mit Hochgeschwindigkeit anhand von Wirkungspfeilen.

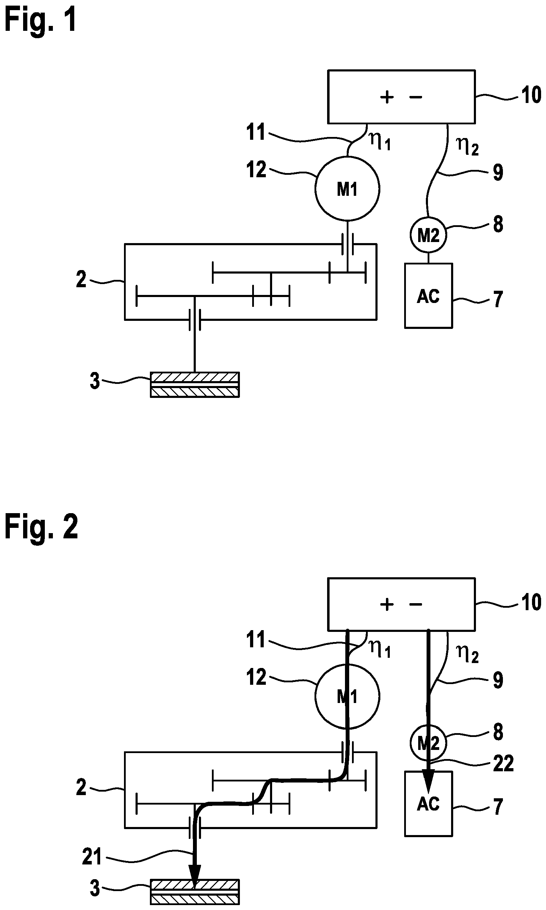

Fig. 1 zeigt in Form einer Prinzipskizze eine Antriebsanordnung in elektrisch angetriebenen Fahrzeugen, bei denen neben einem elektrischen ersten Motor eines Hauptantriebs weitere elektrische Motoren für Nebenantriebe und/oder elektrisch angetriebene Zusatzaggregate vorgesehen und durch Energie aus einem gemeinsamen Energiespeicher antreibbar sind.

Von einer Batterie 10 wird ein Fahrmotor 12 eines hier nicht näher spezifizierten elektrisch angetriebenen Fahrzeugs mit Energie versorgt. Die Energiumwandlung hat einen Wirkungsgrad 11 (η₁), der umso besser ist, je näher der Fahrmotor 12 seinem Vollastbetriebspunkt kommt. Der Fahrmotor 12 treibt über ein 2-stufiges Getriebe 2 die Fahrzeugräder 3 an, von denen hier symbolisch nur eines dargestellt ist.

Das Getriebe hat die Aufgabe, die hohe Drehzahl des Fahrmotors 12 in eine niedrige Drehzahl mit hohem Drehmoment an die Räder 3 umzuwandeln.

Unabhängig davon wird ein Nebenaggregat 7, z.B. ein Klimakompressor (AC= Air Condition) durch einen zweiten kleineren Elektromotor 8 angetrieben. Auch dieser Motor entnimmt seine Energie der Batterie 10 mit dem Wirkungsgrad 9 (η₂).

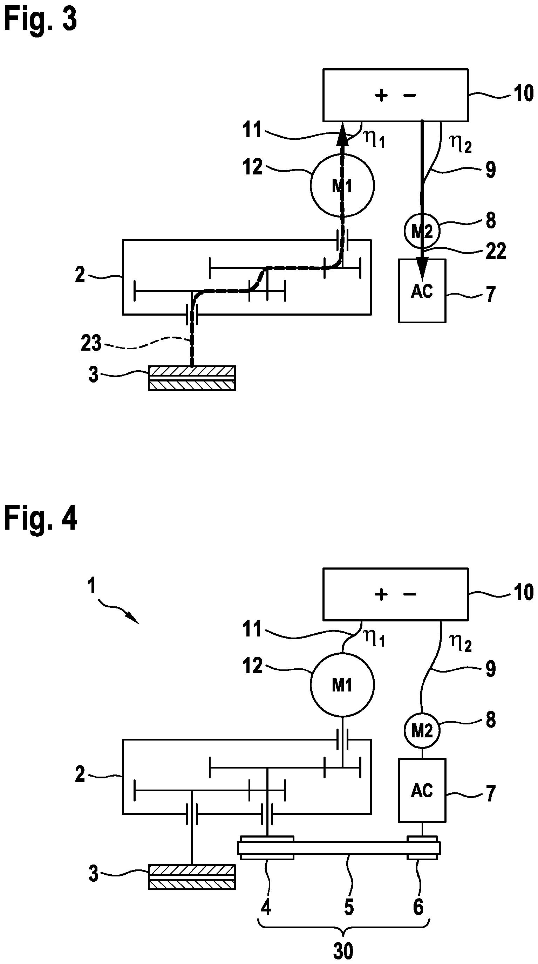

Es ergeben sich mit einer solchen Anordnung die dargestellten möglichen Hauptbetriebsarten, die in den folgenden Fig. 2 und 3 anhand der den jeweiligen Energiefluss darstellenden Wirkungspfeile 21, 22 und 23 gezeigt sind.

Im normalen Fahrbetrieb werden beide Motoren 12 und 8 unabhängig voneinander betrieben und entnehmen beide der Batterie 10 Energie mit ihren jeweiligen Wirkungsgraden 11 (η₁) und 9 (η₂), wie in Fig. 2 gezeigt. Der jeweilige Energiefluss wird hier durch die Wirkungspfeile 21 und 22 dargestellt.

Fig. 3 zeigt den üblichen Rekuperationsbetrieb mit einer solchen Anordnung aus dem Stand der Technik. Im Rekuperationsbetrieb wird die Energie durch den Antriebsstrang und den dann im Generatorbetrieb laufenden Motor 12 mit dem Wirkungsgrad 11 (η₁) in die Batterie zurückgespeist - Wirkungspfeil bzw. Energiefluss 23 - und dann erneut mit dem Wirkungsgrad 9 (η₂) gewandelt, um den Motor 8 mit Energie zu versorgen, gemäß Wirkungspfeil bzw. Energiefluss 22. Der jeweilige Energiefluss wird damit durch die Wirkungspfeile 23 und 22 dargestellt.

Fig. 4 stellt nun die erfindungsgemäße Antriebsanordnung 1 in einem hier wiederum nicht näher spezifizierten elektrisch angetriebenen Fahrzeug dar, bei der der Hauptantrieb und ein Zusatzaggregat, hier ein Klimakompressor (AC= Air Condition), durch ein zusätzliches Riemengetriebe 30 jeweils abtriebsseitig über ein mechanisches Zusatzgetriebe gekoppelt sind.

Das Riemengetriebe besteht aus einer kuppelbaren Riemenscheibe 4, die an einer nach außen geführten Zwischenwelle des Getriebes 2 befestigt ist, einer Riemenscheibe 6 mit integriertem Freilauf, die die auf der Welle des Nebenaggregats 8 befestigt ist und einem Antriebsriemen 5, der die beiden Riemenscheiben 4 und 6 umlaufend/umschlingend miteinander verbindet. Durch einen solchen, zusätzlichen, direkten mechanischen Antrieb der Nebenaggregate wird die doppelte Energiewandlung über die Batterie und die damit verbundenen Zusatzverluste vermieden und der Wirkungsgrad des Motors 12 verbessert, auch und gerade dadurch, dass letzterer weniger im Teillastbereich betrieben wird.

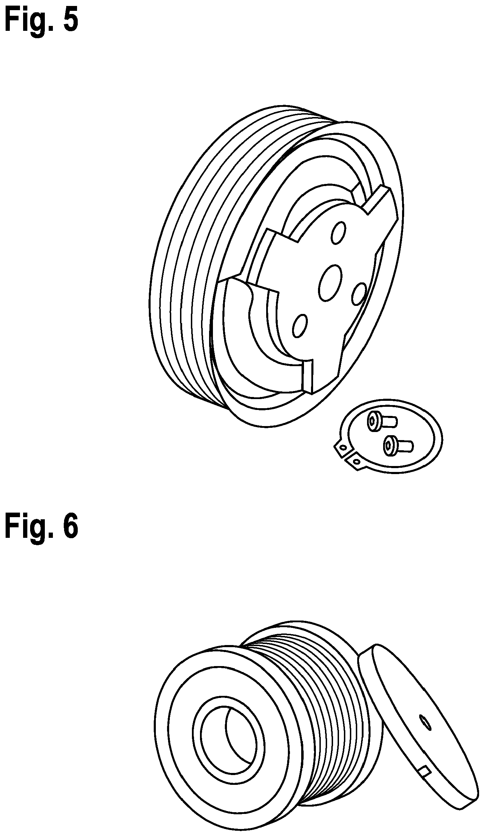

Fig. 5 zeigt eine kuppelbare Riemenscheibe 4 aus dem Stand der Technik, die den bekannten schaltbaren Riemenscheiben entspricht, wie sie zum Antrieb eines Klimakompressors genutzt werden. Fig. 6 zeigt eine Freilaufscheibe 6, welche den heute üblichen Generatorfreilaufscheiben entspricht.

Der Riemen 5 ist ein Keilrippenriemen und wird vorteilhafterweise als Elastriemen ohne Spannsystem ausgebildet, kann alternativ aber auch mit Spannsystem aufgebaut werden. Die Befestigung einer kuppelbaren Riemenscheibe 4 an einer Zwischenwelle wurde gewählt, um den Drehzahlbereich der Eingangsdrehzahl den erforderlichen Nebenaggregatedrehzahlen anzupassen. Der Feinabgleich erfolgt über die Übersetzung zwischen den beiden Riemenscheiben 4 und 6. Die Drehzahl des Motors 12 wäre zu hoch für einen Direktantrieb, die Drehzahl der Räder 3 dagegen zu niedrig, so dass eine Zwischenwelle die beste Möglichkeit zur Ankopplung bildet.

Natürlich können auch angepasste Spannrollen für den Riementrieb vorgesehen werden, etwa solche, die der Riemen mit seiner Rückseite umlaufend umschlingt und mit denen er gespannt wird.

Für den Sonderfall der Rückwärtsfahrt kann außerdem über die kuppelbare Riemenscheibe 4 der Riemen und das Nebenaggregat vollständig abgetrennt werden, um Schäden durch eine falsche Drehrichtung an z.B. einem Klimakompressor 7 zu vermeiden.

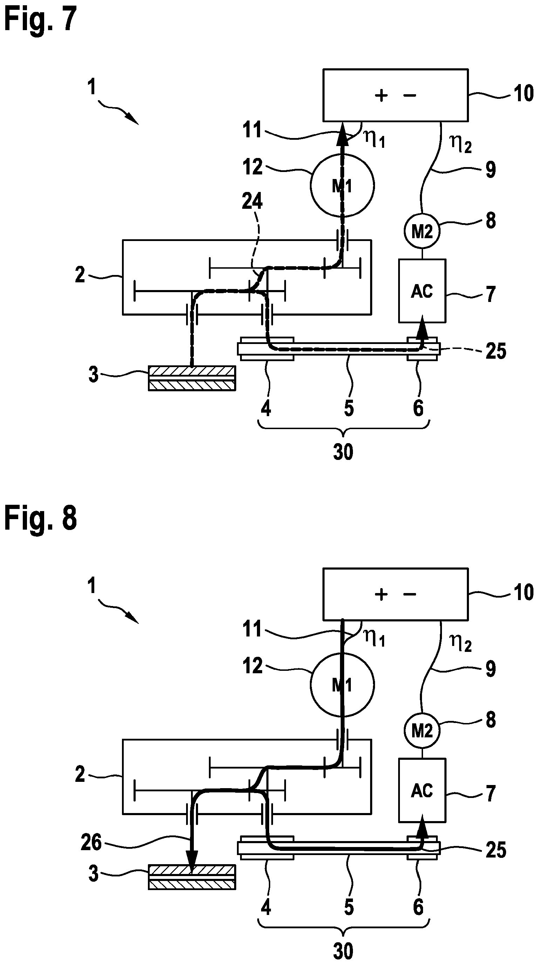

Mit der mit einem zusätzlichen Getriebe versehenen erfindungsgemäßen Antriebsanordnung ergeben sich die in den Fig. 7 bis 10 anhand der Wirkungspfeile 24 bis 29 dargestellten Möglichkeiten des Energieflusses, wodurch die einzelnen Ausbildungen des erfindungsgemäßen Verfahrens realisiert werden.

Fig. 7 zeigt dabei den jeweils vorhandenen Energiefluss 24 und 25 bei der Rekuperation, also bei der Energierückgewinnung, wobei durch die erfindungsgemäße Antriebsanordnung auch das Nebenaggregat 7 direkt mechanisch angetrieben wird. In diesem Betriebsmodus ist die kuppelbare Riemenscheibe 4 eingekuppelt, der Riemen 5 überträgt die Energie direkt auf die Freilaufscheibe 6, die in diesem Fall in Sperrrichtung betrieben wird und das Nebenaggregat 7 direkt antreibt. Der Motor 8 ist nicht bestromt. Der Motor 12 läuft im Generatorbetrieb.

Dadurch werden für den allfälligen Antrieb des Motors 8 zwei Energiewandlungen eingespart, nämlich die anteilige Umwandlung von mechanischer Energie in elektrische Energie der Batterie 10 durch den im Generatorbetrieb laufenden Motor 12 mit Wirkungsgrad 11 (η₁) und die anteilige Umwandlung von elektrischer Energie für den Motor 8 aus der Batterie 10 mit Wirkungsgrad und 9 (η₂), wobei der Motor 8 dann wiederum die mechanische Energie für den Antrieb des Nebenaggregats 7 bereitstellen müsste.

Fig. 8 zeigt den jeweils vorhandenen Energiefluss 25 und 26 beim Fahrbetrieb in einem ersten, normalen Modus, wobei durch die erfindungsgemäße Antriebsanordnung auch hier das Nebenaggregat 7 direkt mechanisch angetrieben wird und somit der Motor 8 ebenfalls nicht bestromt ist. Der Fahrmotor, also der Motor 12 wird dabei durch die zusätzlich zu erbringende Leistung für das Nebenaggregat 7 besser ausgelastet und arbeitet somit in einem günstigeren Wirkungsgrad.

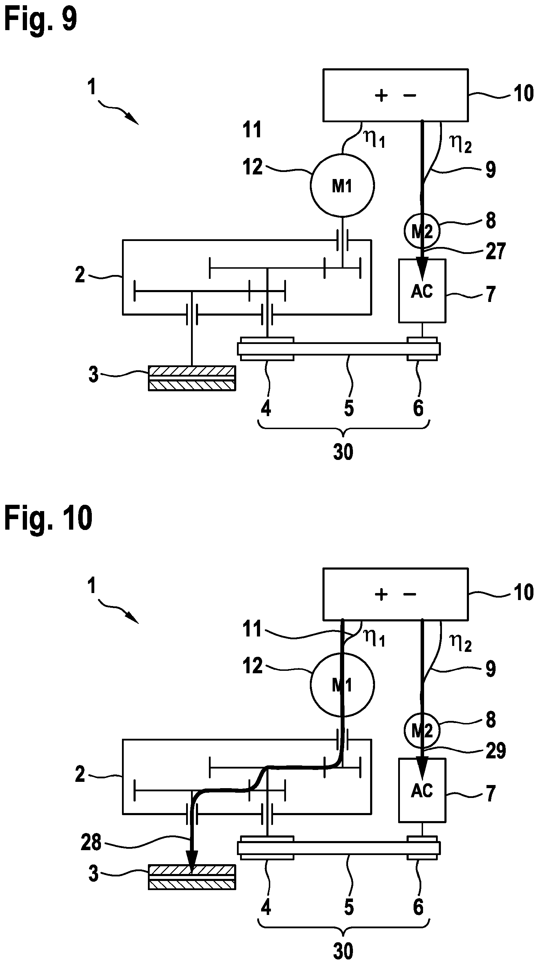

Fig. 9 zeigt den Energiefluss 27 beim Betrieb im Fahrzeugstillstand. Der Fahrantrieb steht still. Das Nebenaggregat 7 wird angetrieben durch den Motor 8, der hier mit Strom aus Batterie und dem Wirkungsgrad 9 (η₂) betrieben wird. Durch den Freilauf 6 steht der Riementrieb jedoch still, verbraucht keine zusätzliche Leistung und wirkt nicht auf den Fahrantrieb zurück.

Fig. 10 zeigt den jeweils vorhandenen Energiefluss 28 und 29 im Fahrbetrieb im Hochdrehzahlbereich, also bei hoher Fahrgeschwindigkeit. Dabei bestünde nämlich die Gefahr, dass das Nebenaggregat 7 bei direkter mechanischer Kopplung über das zusätzliche Riemengetriebe mit zu hoher Eingangsdrehzahl belastet würde. Daher werden in diesem Modus im Sinne des erfindungsgemäßen Verfahrens beide Motoren 12 und 8 aus der Batterie versorgt. Die kuppelbare Riemenscheibe 4 ist ausgekuppelt und der Freilauf 6 arbeitet in Freilaufrichtung. Der Riementrieb 5 steht dann still und verbraucht keine Energie.

Dieser Betriebspunkt könnte mit Änderungen ebenfalls eingestellt werden, wenn der Fahrmotor/Motor 12 sein gesamtes Drehmoment für den Fahrzeugantrieb benötigt (kurzfristige Spitzenlast / Peak-Load) und keine Energie für die Nebenaggregate 7 abgezweigt werden soll. In diesem Fall würde der Motor 8 allerdings nicht bestromt werden, das Nebenaggregat würde nicht angetrieben werden und so der Energiefluss 29 entfallen.

### Bezugszeichenliste

### (Teil der Beschreibung)

- 1: erfindungsgemäße Antriebsanordnung
- 2: 2-stufiges Getriebe
- 3: Fahrzeugrad, angetrieben
- 4: kuppelbare Riemenscheibe
- 5: Antriebsriemen
- 6: Riemenscheibe mit integriertem Freilauf
- 7: Nebenaggregat (Klimakompressor)
- 8: Elektromotor eines Nebenaggregates
- 9: Wirkungsgrad zwischen Batterie und Elektromotor 8
- 10: Batterie
- 11: Wirkungsgrad zwischen Batterie und Fahrmotor 12
- 12: elektischer Fahrmotor

- 21: Energiefluss - Wirkungspfeil
- 22: Energiefluss - Wirkungspfeil
- 23: Energiefluss - Wirkungspfeil
- 24: Energiefluss - Wirkungspfeil, Rekuperation
- 25: Energiefluss - Wirkungspfeil, Rekuperation und Fahrbetrieb
- 26: Energiefluss - Wirkungspfeil, Fahrbetrieb Normalmodus
- 27: Energiefluss - Wirkungspfeil, Fahrzeugstillstand
- 28: Energiefluss - Wirkungspfeil, Hochgeschwindigkeitsbetrieb
- 29: Energiefluss - Wirkungspfeil, Hochgeschwindigkeitsbetrieb
- 30: Riemengetriebe

## Patentansprüche

1. Verfahren zum Betrieb mindestens teilweise elektrisch angetriebener Fahrzeuge, bei denen neben einem ersten elektrischen Motor (12) eines Hauptantriebs weitere elektrische Motoren (8) für Nebenantriebe und/oder elektrisch angetriebene Zusatzaggregate (7) vorgesehen und durch Energie aus einem gemeinsamen Energiespeicher (10) antreibbar sind, wobei der Hauptantrieb und mindestens ein Nebenantrieb oder Zusatzaggregat abtriebsseitig über ein vorzugsweise mit einem Freilauf versehenes mechanisches Zusatzgetriebe (30) miteinander so koppelbar sind, dass die Nebenantriebe und/oder Zusatzaggregate schaltbar entweder durch ihre aus dem Energiespeicher versorgten elektrischen Motoren (8, 12) oder mechanisch über das Zusatzgetriebe (30) angetrieben werden, **dadurch gekennzeichnet, dass** während eines zur Rekuperation erforderlichen Generatorbetriebs des ersten Motors (12) ein oder mehrere der Nebenantriebe oder Aggregate (7) nur über das mechanische Zusatzgetriebe (30) angetrieben werden.

2. Antriebsanordnung in einem elektrisch angetriebenen Fahrzeug, bei denen neben einem ersten elektrischen Motor (12) eines Hauptantriebs weitere elektrische Motoren (8) für Nebenantriebe und/oder elektrisch angetriebene Zusatzaggregate (7) vorgesehen und durch Energie aus einem gemeinsamen Energiespeicher (10) antreibbar sind, wobei der Hauptantrieb und mindestens ein Nebenantrieb oder Zusatzaggregat (7) abtriebsseitig über ein vorzugsweise mit einem einen Freilauf und/oder einer Kupplung versehenen mechanischen Zusatzgetriebe (30) miteinander so koppelbar sind, dass Nebenantrieb oder Zusatzaggregat auch durch den Motor des Hauptantriebs oder eine Welle des Hauptantriebs antreibbar ist, wobei eine schaltbare Kupplung (4) auf der Abtriebsseite des Hauptantriebs und ein Freilauf (6) auf der Abtriebsseite des jeweiligen Nebenantriebs oder Zusatzaggregats (7) vorgesehen sind, wobei das mechanische Zusatzgetriebe (30) auf Seiten des Hauptantriebs mit einer Zwischenwelle des Getriebes (2) für den Hauptantrieb gekoppelt ist, wobei das mechanische Zusatzgetriebe (30) als Riementrieb ausgebildet ist, der mindestens einen Zugriemen aufweist, vorzugsweise mit eingebetteten, in Längsrichtung des Zugriemens ausgebildeten Zugträgern, wobei der Zugriemen mindestens zwei Riemenscheiben (4, 6) umlaufend umschlingt, wobei die Kupplung in Form einer schaltbaren Riemenscheibe (4) ausgebildet ist, **dadurch gekennzeichnet, dass** der Zugriemen als Keilrippenriemen ausgebildet ist.

3. Elektrofahrzeug oder Hybridfahrzeug mit einer Antriebsanordnung nach Anspruch 2.

## Claims

1. Method for operating at least partially electrically driven vehicles, in which, in addition to a first electric motor (12) of a main drive, further electric motors (8) are provided for auxiliary drives and/or electrically driven additional assemblies (7) and can be driven by energy from a common energy store (10), wherein the output ends of the main drive and of at least one auxiliary drive or additional assembly can be coupled to each other via a mechanical additional transmission (30), which is preferably provided with a freewheel, such that the auxiliary drives and/or additional assemblies are switchably driven either by their electric motors (8, 12), which are supplied from the energy store, or mechanically via the additional transmission (30), **characterized in that**, during generator operation of the first motor (12), which is required for the recuperation, one or more of the auxiliary drives or assemblies (7) are driven only via the mechanical additional transmission (30).

2. Drive arrangement in an electrically driven vehicle, in which, in addition to a first electric motor (12) of a main drive, further electric motors (8) are provided for auxiliary drives and/or electrically driven additional assemblies (7) and can be driven by energy from a common energy store (10), wherein the output ends of the main drive and of at least one auxiliary drive or additional assembly (7) can be coupled to each other via a mechanical additional transmission (30), which is preferably provided with a freewheel and/or a clutch, such that the auxiliary drive or the additional assembly can also be driven by the motor of the main drive or a shaft of the main drive, wherein a shiftable clutch (4) is provided at the output end of the main drive and a freewheel (6) is provided at the output end of the respective auxiliary drive or additional assembly (7), wherein the mechanical additional transmission (30), on the side of the main drive, is coupled to an intermediate shaft of the transmission (2) for the main drive, wherein the mechanical additional transmission (30) is designed as a belt drive which has at least one tension belt, preferably with embedded tension members, which are formed in the longitudinal direction of the tension belt, wherein the tension belt circumferentially wraps around at least two belt pulleys (4, 6), wherein the clutch is designed in the form of a switchable belt pulley (4), **characterized in that** the tension belt is designed as a V-ribbed belt.

3. Electric vehicle or hybrid vehicle having a drive arrangement according to Claim 2.

## Revendications

1. Procédé pour faire fonctionner des véhicules à propulsion au moins partiellement électrique, dans lequel outre un premier moteur électrique (12) d'un entraînement principal, sont prévus d'autres moteurs électriques (8) pour des entraînements auxiliaires et/ou des unités supplémentaires (7) à entraînement électrique, et sont aptes à être entraînés par de l'énergie provenant d'un accumulateur d'énergie commun (10), l'entraînement principal et au moins un entraînement auxiliaire ou une unité supplémentaire étant aptes à être reliés l'un à l'autre, côté sortie, par l'intermédiaire d'une transmission mécanique supplémentaire (30), de préférence pourvue d'une roue libre, de telle sorte que les entraînements auxiliaires et/ou les unités supplémentaires sont entraînés de manière commutable soit par leurs moteurs électriques (8, 12) alimentés par l'accumulateur d'énergie, soit mécaniquement via la transmission supplémentaire (30), **caractérisé en ce que** pendant un fonctionnement en générateur du premier moteur (12) nécessaire pour la récupération, un ou plusieurs des entraînements ou des unités auxiliaires (7) sont entraînés uniquement via la transmission mécanique supplémentaire (30).

2. Agencement d'entraînement dans un véhicule à propulsion électrique, dans lequel, outre un premier moteur électrique (12) d'un entraînement principal, sont prévus d'autres moteurs électriques (8) pour des entraînements auxiliaires et/ou des unités supplémentaires (7) à entraînement électrique, et sont aptes à être entraînés par de l'énergie provenant d'un accumulateur d'énergie commun (10), l'entraînement principal et au moins un entraînement auxiliaire ou une unité supplémentaire (7) étant aptes à être reliés l'un à l'autre côté sortie via une transmission mécanique supplémentaire (30) pourvue de préférence d'une roue libre et/ou d'une liaison, de telle sorte que l'entraînement auxiliaire ou l'unité supplémentaire puisse également être entraîné par le moteur de l'entraînement principal ou par un arbre de l'entraînement principal, une liaison commutable (4) étant prévue sur le côté sortie de l'entraînement principal et une roue libre (6) étant prévue sur le côté sortie de l'entraînement auxiliaire ou de l'unité supplémentaire (7) respective, la transmission mécanique supplémentaire (30) étant reliée, du côté de l'entraînement principal, à un arbre intermédiaire (2) de la transmission pour l'entraînement principal, la transmission mécanique supplémentaire (30) étant conçue sous la forme d'un entraînement à courroie, qui présente au moins une courroie de traction, de préférence avec des supports de traction intégrés, formés dans le sens longitudinal de la courroie de traction, la courroie de traction entourant au moins deux poulies (4, 6), la liaison étant réalisée sous la forme d'une poulie (4) commutable, **caractérisé en ce que** la courroie de traction est réalisée sous la forme d'une courroie trapézoïdale à nervures.

3. Véhicule électrique ou hybride avec un agencement d'entraînement selon la revendication 2.
